Europäisches Patentamt

European Patent Office

Office européen des brevets

(19)

(11) Numéro de publication : **0 049 655**
**B1**

(12) **FASCICULE DE BREVET EUROPÉEN**

(45) Date de publication du fascicule du brevet :
17.07.85

(51) Int. Cl.⁴ : **F 02 C 7/18**

(21) Numéro de dépôt : **81401488.2**

(22) Date de dépôt : **25.09.81**

(54) **Dispositif de refroidissement d'une turbine à gaz, par prélèvement d'air au niveau du compresseur.**

(30) Priorité : **08.10.80 FR 8021454**

(43) Date de publication de la demande :
**14.04.82 Bulletin 82/15**

(45) Mention de la délivrance du brevet :
**17.07.85 Bulletin 85/29**

(84) Etats contractants désignés :
**DE FR GB**

(56) Documents cités :
**DE-A- 1 926 423**
**DE-A- 2 633 222**
**FR-A-   966 804**
**FR-A- 2 101 178**
**FR-A- 2 292 866**
**GB-A-   712 051**
**US-A- 2 618 433**
**US-A- 2 641 440**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Bouiller, Jean Georges**
**10, rue Kléber**
**F-91800 Brunoy (FR)**
Inventeur : **Crozet, Francois Emile Georges**
**Les rives de l'Yerres Bt C2**
**rue Pierre de Coubertin F-91330 Yerres (FR)**
Inventeur : **Soligny, Marcel Robert**
**136, Boulevard Jean Mermoz**
**F-94150 Chevilly-Larue (FR)**

(74) Mandataire : **Moinat, François et al**
**S.N.E.C.M.A. Service des Brevets Boîte Postale 81**
**F-91003 Evry Cedex (FR)**

Jouve, 18, rue St-Denis, 75001 Paris, France

## Description

La présente invention a pour objet un dispositif de refroidissement d'une turbine à gaz par prélèvement d'air au niveau du compresseur.

Dans les moteurs refroidis par l'intérieur du rotor haute pression, l'air de refroidissement est prélevé dans la veine par des orifices percés dans les viroles du tambour de compresseur.

Or ces perçages ont pour inconvénient de limiter la valeur maximale admissible du rayon de la virole. En effet, la virole est très sollicitée sous l'action du champ centrifuge ; si l'on y ménage des perçages, on est souvent conduit, pour obtenir la section de passage voulue, à augmenter la distance entre deux disques, donc la longueur de l'entretoise. Cette augmentation de la longueur de l'entretoise, cumulée à l'effet du coefficient de forme dû aux trous, élève le niveau des contraintes locales, notamment des contraintes de flexion, d'où la nécessité de réduire le diamètre des viroles entretoises.

Cette restriction du diamètre des viroles entraîne des conséquences sur la technologie des éléments de la veine et sur le rendement du refroidissement. En ce qui concerne la technologie des éléments de la veine, cette restriction du diamètre des viroles entraîne une impossibilité de recourir à des attaches marteau qui sont moins coûteuses que les attaches brochées. Les attaches marteau induisent en effet sur le disque des contraintes de flexion élevées et il est recommandé, pour amener ces contraintes à un niveau acceptable, de placer les viroles entretoises le plus haut possible vers la jante. Or, nous avons vu à l'alinéa précédent que cette disposition est incompatible avec la présence de trous de refroidissement, générateurs également de contraintes de flexion importantes.

En ce qui concerne le refroidissement, l'importance de l'enceinte morte entraîne des recirculations qui perturbent le débit d'air de refroidissement.

Pour que le prélèvement ait un certain rendement, il faut accélérer le débit au moyen de tubes ou d'ailettes centripètes.

FR-A-2 101 178 décrit un dispositif de refroidissement d'une turbine à gaz dans lequel l'air est prélevé à la fois par des orifices radiaux formés sur le pourtour d'un disque du compresseur et par des orifices formés entre des étages aval, lesdits orifices connectant le passage d'écoulement annulaire du compresseur avec un passage radial ménagé dans le disque.

La présente invention a pour objet un dispositif permettant de remédier aux inconvénients des dispositifs connus.

Conformément à la présente invention, le prélèvement de l'air est effectué à partir d'orifices percés dans les plateformes des aubes fixées sur le disque, lesdits orifices étant en communication avec les conduits radiaux du disque de compresseur et présentant en section une forme elliptique dont le grand axe est perpendiculaire à l'écoulement du fluide. Cette disposition suivant l'invention permet, du fait du report des trous dans le plan du disque, d'augmenter le diamètre des viroles, d'avoir recours aux attaches marteau pour les aubes, ce qui permet un gain de masse important et une réduction des coûts. Les prélèvements d'air sur les plateformes des aubes aspirent la couche limite et contribuent à assainir la veine. Le prélèvement d'air s'effectuant sur les plateformes, on élimine les problèmes liés aux mouvements relatifs stator-rotor qui peuvent perturber le débit.

Le dispositif suivant l'invention permet d'éliminer les problèmes d'instabilité du débit de refroidissement liés aux recirculations dans l'enceinte délimitée par les plateformes et les viroles.

D'autres caractéristiques et avantages de l'invention seront mieux compris à la lecture de la description qui va suivre de plusieurs modes de réalisation et en se référant aux dessins annexés, dans lesquels :

la figure 1  est une vue en coupe radiale d'un mode de réalisation d'un disque de compresseur suivant l'invention ;

la figure 2  est une vue du pourtour du disque et des aubes suivant la flèche F de la figure 1 ;

la figure 3  est une vue du disque suivant la flèche F1 de la figure 1 ;

la figure 4  est une vue en coupe radiale d'un autre mode de réalisation du disque en deux parties ;

la figure 5  est une vue en coupe suivant la ligne VV de la figure 4.

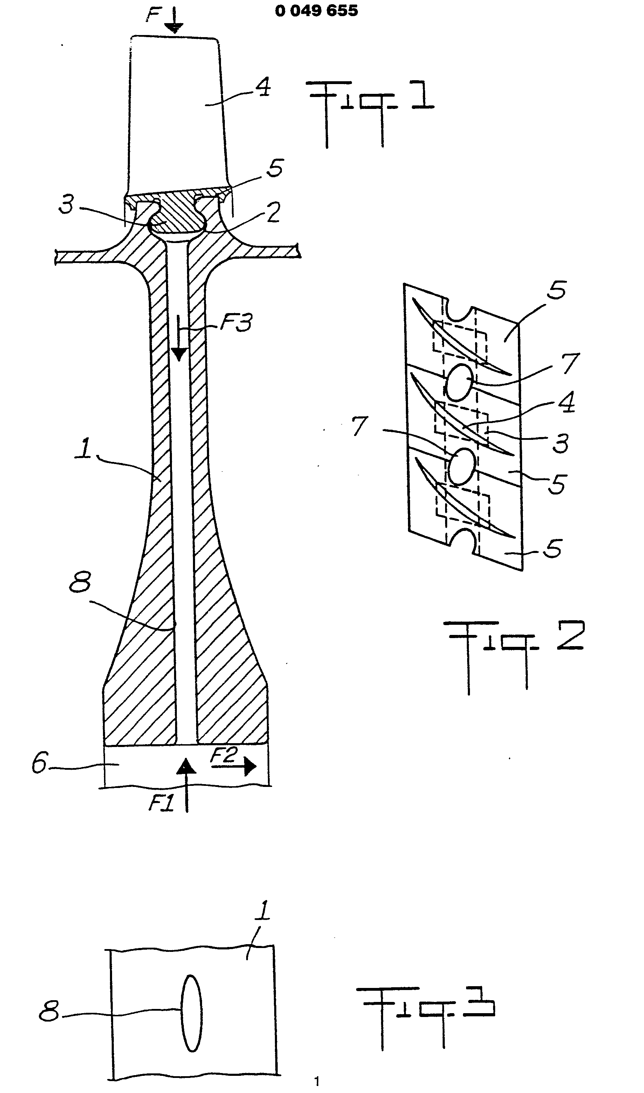

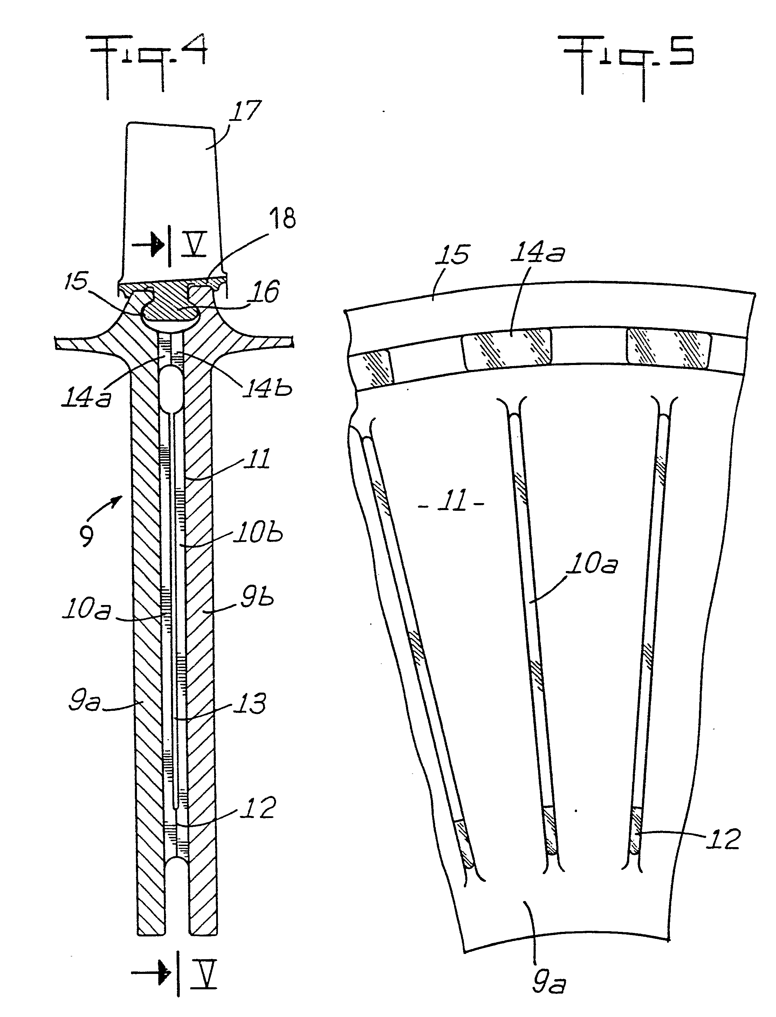

Aux figures 1, 2 et 3, on a représenté un disque 1 de compresseur pour moteur à turbine à gaz et qui présente sur son pourtour une rainure 2 dans laquelle sont engagés les organes d'attache marteau 3 des aubes 4 dont les plateformes 5 sont disposées de façon contiguë. Le prélèvement d'air est réalisé au niveau des aubes 4 du compresseur et il est acheminé ensuite par la partie centrale 6 du compresseur suivant la flèche F2 vers la turbine du moteur.

Le prélèvement d'air suivant l'invention est effectué dans le plan du disque 1 à partir des orifices 7 percés dans les plateformes 5 des aubes 4. Les orifices 7 sont constitués de demi-découpes effectuées sur les plateformes 5 de deux aubes contiguës.

Les orifices 7 présentent en section une forme elliptique dont le grand axe est de préférence perpendiculaire à l'écoulement du fluide.

A partir des orifices 7, l'air prélevé est acheminé vers le centre 6 suivant la flèche F3 par des conduits radiaux 8 percés dans le disque 1 par usinage électrolytique, électroérosion, etc... Les conduits radiaux 8 qui sont répartis suivant toute la circonférence du disque sont situés dans le plan du disque 1. Lorsque le disque 1 comporte un nombre d'aubes pair, l'usinage de deux conduits 8 diamétralement opposés peut être réalisé en une seule passe.

Aux figures 4 et 5, on a représenté un disque de compresseur 9 qui est constitué de deux demi-disques 9a et 9b dont la face intérieure est usinée pour présenter des ailettes radiales 10a et 10b ménageant entre elles des passages radiaux 11 d'air de refroidissement.

Ces ailettes 10a et 10b prennent appui l'une sur l'autre à la base du disque en 12, et il est prévu un jeu 13 entre elles sur tout le reste de leur hauteur.

La liaison notamment par soudure entre les deux demi-disques est assurée par les parties 14a, 14b à la hauteur de la jante. Lorsqu'ils sont soudés, les deux demi-disques restent plaqués l'un sur l'autre en 12. D'ailleurs, en rotation, la force centrifuge exercée sur le disque par les aubes crée un couple qui tend à faire tourner les demi-disques autour de leur centre de gravité et à les plaquer davantage l'un sur l'autre dans la zone d'appui 12. Sur son pourtour, le disque présente une rainure circulaire 15 dans laquelle sont engagés les organes d'attache marteau 16 des aubes 17 dont les plateformes 18 présentent entre elles des orifices pour le prélèvement de l'air comme ceux représentés en 7 à la figure 2.

**Revendications**

1. Dispositif de refroidissement d'une turbine à gaz, par prélèvement d'air au niveau du compresseur et acheminement de l'air au centre du moteur vers la turbine, pour la refroidir, dans lequel l'air est prélevé dans le plan du disque (1 ; 9) portant les aubes (4 ; 17) du compresseur et comportant des conduits radiaux (8 ; 11), caractérisé en ce que le prélèvement est effectué à partir d'orifices (7) percés dans les plateformes (5 ; 18) des aubes (4 ; 17) fixées sur le disque, lesdits orifices (7) étant en communication avec lesdits conduits radiaux (8 ; 11) et présentant en section une forme elliptique dont le grand axe est perpendiculaire à l'écoulement du fluide.

2. Dispositif de refroidissement suivant la revendication 1, caractérisé en ce que les orifices (7) sont constitués de deux demi-découpes effectuées sur les plateformes (5 ; 18) de deux aubes contiguës.

3. Dispositif de refroidissement suivant la revendication 1 dans lequel le disque (9) est constitué de deux demi-disques (9a, 9b), caractérisé en ce que les demi-disques (9a ; 9b) présentent des ailettes radiales (10a ; 10b) ménageant entre elles des passages (11) pour l'air de refroidissement, lesdites ailettes (10a ; 10b), après assemblage par soudure des demi-disques (9a ; 9b) à proximité de leur jante, prenant appui l'une sur l'autre à la base (12) du disque et présentant un jeu (13) sur tout le reste de leur hauteur.

**Claims**

1. Gas tubine cooling arrangement, functioning by bleeding air at the compressor zone and directing the air centrally of the engine to the turbine in order to cool it, wherein the air is bled in the plane of the disc (1 ; 9) carrying the blades (4 ; 17) of the compressor and comprising radial passages (8 ; 11), characterised in that the bleed is effected through orifices (7) provided in the platforms (5 ; 18) of the blades (4 ; 17) mounted on the disc, the said orifices (7) communicating with the said radial passages (8 ; 11) and having an elliptical cross-section, of which the major axis is perpendicular to the fluid flow path.

2. Cooling arrangement according to Claim 1, characterised in that the orifices (7) consist of two bore halves formed in the platforms (5 ; 18) of two contiguous vanes.

3. Cooling arrangement according to Claim 1 in which the disc (9) is constituted by two disc halves (9a ; 9b), characterised in that the disc halves (9a ; 9b) have radial fins (10a ; 10b) which define between them passages (11) for the cooling air, the said fins (10a ; 10b), after welding together of the disc halves (9a ; 9b) in the proximity of their rim, bearing one on the other at the base (12) of the disc and defining a clearance (13) over the remainder of their height.

**Patentansprüche**

1. Kühlvorrichtung für Gasturbinentriebwerke mit Luftentnahme vom Verdichter und Förderung der Luft in das Zentrum des Triebwerks und zu der Turbine zu deren Kühlung, wobei die Luft in der Ebene der Scheibe (1 ; 9), die Schaufeln (4 ; 17) des Verdichters trägt und radiale Kanäle (8 ; 11) enthält, gefördert wird, dadurch gekennzeichnet, daß die Förderung von Öffnungen (7) ausgehend durchgeführt wird, die durch Fußplatten (5 ; 18) der Schaufeln (4 ; 17) verlaufend ausgebildet sind, die an der Scheibe befestigt sind, welche Öffnungen (7) in Verbindung mit den radialen Kanälen (8 ; 11) stehen und im Querschnitt eine elliptische Form aufweisen, deren Hauptachse senkrecht zu der Fluidströmung liegt.

2. Kühlvorrichtung nach Anspruch 1, dadurch gekennzeichnet, daß die Öffnungen (7) aus zwei Halbausschnitten gebildet sind, die in den Fußplatten (5 ; 18) zweier Schaufeln, die aneinanderstoßen, ausgeführt sind.

3. Kühlvorrichtung nach Anspruch 1, bei der die Scheibe (9) aus zwei Halbscheiben (9a, 9b) gebildet ist, dadurch gekennzeichnet, daß die Halbscheiben (9a, 9b) radiale Flügel (10a, 10b) aufweisen, die in sich die Kanäle (11) für die Kühlluft ausgespart enthalten, welche Flügel (10a, 10b) nach dem Zusammenbau der Halbscheiben (9a ; 9b) durch Schweißen nahe deren Scheibenkranz in der Lage sind, sich einer auf dem anderen an der Basis (12) der Scheibe abzustützen, und zwischen sich einen Zwischenraum (13) über den gesamten Rest ihrer Höhe aufweisen.

Fig. 1

Fig. 2

Fig. 3

# Fig.4

# Fig.5

17

18

V

15

16

14a

14b

11

9

10b

10a

9b

9a

13

12

V

15

14a

- 11 -

10a

9a

12